# EUROPEAN PATENT SPECIFICATION

(11) **EP 2 205 649 B1**
(45) Date of publication and mention of the grant of the patent: **26.12.2012**
(21) Application number: 08846427.6
(22) Date of filing: 07.11.2008
(51) Int. Cl.: C08F 214/26, C08F 2/26

(54) **PROCESS FOR PRODUCING FLUOROPOLYMERS**
VERFAHREN ZUR HERSTELLUNG VON FLUORPOLYMEREN
PROCÉDÉ DE PRODUCTION DE POLYMÈRES FLUORÉS

(30) Priority: 09.11.2007 US 2587; 21.10.2008 US 255142
(43) Date of publication of application: 14.07.2010
(73) Proprietor: E. I. du Pont de Nemours and Company, Wilmington, DE 19898 (US)
(72) Inventor: COUGHLIN, Michael, Cregg, Wilmington Delaware 19810 (US); HUNG, Ming-hong, Wilmington Delaware 19803 (US); TANG, Phan, L., West Chester Pennsylvania 19382 (US)
(74) Representative: Dannenberger, Oliver Andre
(86) International application number: PCT/US2008/082755
(87) International publication number: WO 2009/062006

(56) References cited:
- WO-A-2005/121290
- US-A- 5 877 267

## Description

### FIELD OF THE INVENTION

This invention pertains to an emulsion polymerization process for the production of fluoropolymers wherein a perfluoroaliphatic sulfinate is employed as dispersing agent.

### BACKGROUND OF THE INVENTION

Production of fluoropolymers, both thermoplastic and elastomeric, by emulsion and solution polymerization methods is well known in the art; see for example U.S. Patent Nos. 4,214,060; 4,281,092; 4,380,618; 4,524,197; 5,789,508; 6,774,764 B2. Generally, fluoropolymers are produced in an emulsion polymerization process wherein a water-soluble polymerization initiator and a relatively large amount of surfactant are employed.

Grootaert (U.S. Patent No. 5,285,002) and Farnham et al. (U.S. Patent No. 5,639,837) disclose the emulsion polymerization of fluoromonomers in the presence a redox initiator system comprising a fluoroaliphatic sulfinate reducing agent and a persulfate, chlorate, bromate or hypochlorite oxidizing agent. The resulting fluoropolymer has perfluorinated endgroups derived from the fluoroaliphatic sulfinate. Except for the polymerization of copolymers of vinylidene fluoride (VF₂) and hexafluoropropylene (HFP), which does not require a fluorosurfactant, all of the exemplified polymerizations employed a fluorosurfactant such as a perfluoroalkyl carboxylic acid or salt, a fluoroalkyl carboxylic acid or salt, a perfluoroalkyl sulfonic acid or salt, or a fluoroalkyl sulfonic acid or salt in order to stabilize the fluoropolymer dispersions.

### SUMMARY OF THE INVENTION

One aspect of the present invention provides an emulsion polymerization process for the production of copolymers of tetrafluoroethylene and perfluoro (alkyl vinyl) ether, said process comprising polymerizing tetrafluoroethylene and perfluoro (alkyl vinyl) ether in an aqueous medium comprising initiator and dispersing agent to obtain an aqueous dispersion of fluoropolymer, wherein said dispersing agent consists essentially of at least one perfluoroaliphatic sulfinate.

### DETAILED DESCRIPTION OF THE INVENTION

The present invention is directed to an emulsion polymerization process for producing a fluoropolymer, said fluoropolymer being a fluoroelastomer.

Fluoroelastomers made by the process of this invention contain between 10 to 70 weight percent, based on the weight of the fluoroelastomer, of copolymerized units of tetrafluoroethylene (TFE). The remaining units in the fluoroelastomers are comprised of one or more additional copolymerized monomers (i.e. comonomers) selected from the group consisting of fluoromonomers (e.g. fluorine-containing olefins or fluorine-containing vinyl ethers), hydrocarbon olefins and mixtures thereof.

According to the present invention, fluorine-containing olefins copolymerizable with tetrafluoroethylene include, but are not limited to, vinylidene fluoride, hexafluoropropylene (HFP), 1,2,3,3,3-pentafluoropropene (1-HPFP), 1,1,3,3,3-pentafluoropropene (2-HPFP), chlorotrifluoroethylene (CTFE) and vinyl fluoride.

Perfluoro(alkyl vinyl) ethers (PAVE) suitable for use as monomers include those of the formula

CF₂=CFO(R_{f'}O)ₙ(R_{f''}O)ₘR_{f} (I)

where R_{f'} and R_{f"} are different linear or branched perfluoroalkylene groups of 2-6 carbon atoms, m and n are independently 0-10, and R_{f} is a perfluoroalkyl group of 1-6 carbon atoms.

A preferred class of perfluoro(alkyl vinyl) ethers includes compositions of the formula

CF₂=CFO(CF₂CFXO)ₙR_{f} (II)

where X is F or CF₃, n is 0-5, and R_{f} is a perfluoroalkyl group of 1-6 carbon atoms.

A most preferred class of perfluoro(alkyl vinyl) ethers includes those ethers wherein n is 0 or 1 and R_{f} contains 1-3 carbon atoms. Examples of such perfluorinated ethers include perfluoro(methyl vinyl) ether (PMVE) and perfluoro(propyl vinyl) ether (PPVE). Other useful monomers include compounds of the formula

CF₂=CFO[(CF₂)ₘCF₂CFZO]ₙR_{f} (III)

where R_{f} is a perfluoroalkyl group having 1-6 carbon atoms, m = 0 or 1, n = 0-5, and Z = F or CF₃. Preferred members of this class are those in which R_{f} is C₃F₇, m = 0, and n = 1.

Additional perfluoro(alkyl vinyl) ether monomers include compounds of the formula

CF₂=CFO[(CF₂CF{CF₃}O)ₙ(CF₂CF₂CF₂O)ₘ(CF₂)ₚ]CₓF₂ₓ₊₁ (IV)

where m and n independently = 0-10, p = 0-3, and x = 1-5. Preferred members of this class include compounds where n = 0-1, m = 0-1, and x = 1.

Other examples of useful perfluoro(alkyl vinyl ethers) include

CF₂=CFOCF₂CF(CF₃)O(CF₂O)ₘCₙF₂ₙ₊₁ (V)

where n = 1-5, m = 1-3, and where, preferably, n = 1.

The PAVE content generally ranges from 25 to 75 weight percent, based on the total weight of the fluoroelastomer. If perfluoro(methyl vinyl) ether is used, then the fluoroelastomer preferably contains between 30 and 60 wt.% copolymerized PMVE units.

Hydrocarbon olefins useful in the fluoropolymers prepared by the process of this invention include, but are not limited to ethylene and propylene. If copolymerized units of a hydrocarbon olefin are present in the fluoroelastomers prepared by the process of this invention, hydrocarbon olefin content is generally 4 to 30 weight percent, based on total weight of copolymerized monomers.

The fluoroelastomers prepared by the process of the present invention may also, optionally, comprise units of one or more cure site monomers. Examples of suitable cure site monomers include, but are not limited to: i) bromine -containing olefins; ii) iodine-containing olefins; iii) bromine-containing vinyl ethers; iv) iodine-containing vinyl ethers; v) fluorine-containing olefins having a nitrile group; vi) fluorine-containing vinyl ethers having a nitrile group; vii) 1,1,3,3,3-pentafluoropropene (2-HPFP); viii) perfluoro(2-phenoxypropyl vinyl) ether; and ix) non-conjugated dienes.

Brominated cure site monomers may contain other halogens, preferably fluorine. Examples of brominated olefin cure site monomers are CF₂=CFOCF₂CF₂CF₂OCF₂CF₂Br; bromotrifluoroethylene; 4-bromo-3,3,4,4-tetrafluorobutene-1 (BTFB); and others such as vinyl bromide, 1-bromo-2,2-difluoroethylene; perfluoroallyl bromide; 4-bromo-1,1,2-trifluorobutene-1; 4-bromo-1,1,3,3,4,4,-hexafluorobutene; 4-bromo-3-chloro-1,1,3,4,4-pentafluorobutene; 6-bromo-5,5,6,6-tetrafluorohexene; 4-bromoperfluorobutene-1 and 3,3-difluoroallyl bromide. Brominated vinyl ether cure site monomers useful in the invention include 2-bromo-perfluoroethyl perfluorovinyl ether and fluorinated compounds of the class CF₂Br-R_{f}-O-CF=CF₂ (R_{f} is a perfluoroalkylene group), such as CF₂BrCF₂O-CF=CF₂, and fluorovinyl ethers of the class ROCF=CFBr or ROCBr=CF₂ (where R is a lower alkyl group or fluoroalkyl group) such as CH₃OCF=CFBr or CF₃CH₂OCF=CFBr.

Suitable iodinated cure site monomers include iodinated olefins of the formula: CHR=CH-Z-CH₂CHR-I, wherein R is -H or -CH₃; Z is a C₁-C₁₈ (per)fluoroalkylene radical, linear or branched, optionally containing one or more ether oxygen atoms, or a (per)fluoropolyoxyalkylene radical as disclosed in U.S. Patent 5,674,959. Other examples of useful iodinated cure site monomers are unsaturated ethers of the formula: I(CH₂CF₂CF₂)ₙOCF=CF₂ and ICH₂CF₂O[CF(CF₃)CF₂O]ₙCF=CF₂, wherein n=1-3, such as disclosed in U.S. Patent 5,717,036. In addition, suitable iodinated cure site monomers including iodoethylene, 4-iodo-3,3,4,4-tetrafluorobutene-1 (ITFB); 3-chloro-4- iodo-3,4,4-trifluorobutene; 2-iodo-1,1,2,2-tetrafluoro-1-(vinyloxy)ethane; 2-iodo-1-(perfluorovinyloxy)-1,1,-2,2-tetrafluoroethylene; 1,1,2,3,3,3-hexafluoro-2-iodo-1-(perfluorovinyloxy)propane; 2-iodoethyl vinyl ether; 3,3,4,5,5,5-hexafluoro-4-iodopentene; and iodotrifluoroethylene are disclosed in U.S. Patent 4,694,045. Allyl iodide and 2-iodo-perfluoroethyl perfluorovinyl ether are also useful cure site monomers.

Useful nitrile-containing cure site monomers include those of the formulas shown below.

CF₂=CF-O(CF₂)ₙ-CN (VI)

where n = 2-12, preferably 2-6;

CF₂=CF-O[CF₂-CF(CF₃)-O]ₙ-CF₂-CF(CF₃)-CN (VII)

where n= 0-4, preferably 0-2;

CF₂=CF-[OCF₂CF(CF₃)]ₓ-O-(CF₂)ₙ-CN (VIII)

where x = 1-2, and n = 1-4; and

CF₂=CF-O-(CF₂)ₙ-O-CF(CF₃)CN (IX)

where n = 2-4.
Those of formula (VIII) are preferred. Especially preferred cure site monomers are perfluorinated polyethers having a nitrile group and a trifluorovinyl ether group. A most preferred cure site monomer is

CF₂=CFOCF₂CF(CF₃)OCF₂CF₂CN (X)

i.e. perfluoro(8-cyano-5-methyl-3,6-dioxa-1-octene) or 8-CNVE.

Examples of non-conjugated diene cure site monomers include, but are not limited to 1,4-pentadiene; 1,5-hexadiene; 1,7-octadiene; 3,3,4,4-tetrafluoro-1,5-hexadiene; and others, such as those disclosed in Canadian Patent 2,067,891 and European Patent 0784064A1. A suitable triene is 8-methyl-4-ethylidene-1,7-octadiene.

Of the cure site monomers listed above, preferred compounds, for situations wherein the fluoroelastomer will be cured with peroxide, include 4-bromo-3,3,4,4-tetrafluorobutene-1 (BTFB); 4-iodo-3,3,4,4-tetrafluorobutene-1 (ITFB); allyl iodide; bromotrifluoroethylene and a nitrile-containing cure site monomer such as 8-CNVE. When the fluoroelastomer will be cured with a polyol, 2-HPFP or perfluoro(2-phenoxypropyl vinyl) ether is the preferred cure site monomer. When the fluoroelastomer will be cured with a tetraamine, bis(aminophenol) or bis(thioaminophenol), a nitrile-containing cure site monomer (e.g. 8-CNVE) is the preferred cure site monomer. When the fluoroelastomer will be cured with ammonia or a compound that releases ammonia at curing temperatures (e.g. urea), a nitrile-containing cure site monomer (e.g. 8-CNVE) is the preferred cure site monomer.

Units of cure site monomer, when present in the fluoroelastomers manufactured by the process of this invention, are typically present at a level of 0.05-10 wt.% (based on the total weight of fluoroelastomer), preferably 0.05-5 wt.% and most preferably between 0.05 and 3 wt.%.

Specific fluoroelastomers which may be produced by the process of this invention include, but are not limited to those comprising copolymerized units of i) vinylidene fluoride, perfluoro(methyl vinyl) ether, tetrafluoroethylene and 4-bromo-3,3,4,4-tetrafluorobutene-1; ii) vinylidene fluoride, perfluoro(methyl vinyl) ether, tetrafluoroethylene and 4-iodo-3,3,4,4-tetrafluorobutene-1; iii) vinylidene fluoride, perfluoro(methyl vinyl) ether, tetrafluoroethylene and 1,1,3,3,3-pentafluoropropene; iv) tetrafluoroethylene, perfluoro(methyl vinyl) ether and ethylene; v) tetrafluoroethylene, perfluoro(methyl vinyl) ether, ethylene and 4-bromo-3,3,4,4-tetrafluorobutene-1; vi) tetrafluoroethylene, perfluoro(methyl vinyl) ether, ethylene and 4-iodo-3,3,4,4-tetrafluorobutene-1; vii) tetrafluoroethylene and perfluoro(methyl vinyl) ether; viii) tetrafluoroethylene, perfluoro(methyl vinyl) ether and perfluoro(8-cyano-5-methyl-3,6-dioxa-1-octene); ix) tetrafluoroethylene, perfluoro(methyl vinyl) ether and 4-bromo-3,3,4,4-tetrafluorobutene-1; x) tetrafluoroethylene, perfluoro(methyl vinyl) ether and 4-iodo-3,3,4,4-tetrafluorobutene-1; and xi) tetrafluoroethylene, perfluoro(methyl vinyl) ether and perfluoro(2-phenoxypropyl vinyl) ether.

Additionally, iodine-containing endgroups, bromine-containing endgroups or mixtures thereof may optionally be present at one or both of the fluoroelastomer polymer chain ends as a result of the use of chain transfer or molecular weight regulating agents during preparation of the fluoroelastomers. The amount of chain transfer agent, when employed, is calculated to result in an iodine or bromine level in the fluoroelastomer in the range of 0.005-5 wt.%, preferably 0.05-3 wt.%.

Examples of chain transfer agents include iodine-containing compounds that result in incorporation of bound iodine at one or both ends of the polymer molecules. Methylene iodide; 1,4-diiodoperfluoro-n-butane; and 1,6-diiodo-3,3,4,4,tetrafluorohexane are representative of such agents. Other iodinated chain transfer agents include 1,3-diiodoperfluoropropane; 1,6-diiodoperfluorohexane; 1,3-diiodo-2-chloroperfluoropropane; 1,2-di(iododifluoromethlyl)-perfluorocyclobutane; monoiodoperfluoroethane; monoiodoperfluorobutane; and 2-iodo-1-hydroperfluoroethane. Also included are the cyano-iodine chain transfer agents disclosed European Patent 0868447A1. Particularly preferred are diiodinated chain transfer agents.

Examples of brominated chain transfer agents include 1-bromo-2-iodoperfluoroethane; 1-bromo-3-iodoperfluoropropane; 1-iodo-2-bromo-1,1-difluoroethane and others such as disclosed in U.S. Patent 5,151,492.

Other chain transfer agents suitable for use in the process of this invention include those disclosed in U.S. Patent 3,707,529. Examples of such agents include isopropanol, diethylmalonate, ethyl acetate, carbon tetrachloride, acetone and dodecyl mercaptan.

Cure site monomers and chain transfer agents may be added to the reactor neat or as solutions. In addition to being introduced into the reactor near the beginning of polymerization, quantities of chain transfer agent may be added throughout the entire polymerization reaction period, depending upon the desired composition of the fluoroelastomer being produced, the chain transfer agent being employed, and the total reaction time.

The dispersing agent employed in the emulsion polymerization of this invention consists of one or more perfluoroaliphatic sulfinates. The sulfinate may have a formula R_{f} - SO₂M, where R_{f} is a perfluoroalkyl group or a perfluoroalkoxy group. The sulfinate may also have the formula R_{f} - (SO₂M)ₙ where R_{f'} is a polyvalent, preferably divalent, perfluoro radical and n is an integer from 2-4, preferably 2. Preferably the perfluoro radical is a perfluoroalkylene radical. Generally R_{f} and Rf have 1 to 20 carbon atoms, preferably 4 to 10 carbon atoms. M is a cation having a valence of 1 (e.g. H⁺, Na⁺, K⁺ and NH₄⁺). Specific examples of such fluorosurfactants include, but are not limited to C₄F₉-SO₂Na; C₆F₁₃-SO₂Na; C₈F₁₇-SO₂Na; C₆F₁₂-(SO₂Na)₂; and C₃F₇-O-CF₂CF₂-SO₂Na.

The dispersing agent is substantially free from fluorosurfactants other than perfluoroaliphatic sulfinates. In other words, the dispersing agent is substantially free from fluorosurfactants such as perfluoroalkyl carboxylic acids or salts, fluoroalkyl carboxylic acids or salts, perfluoroalkyl sulfonic acids or salts, and fluoroalkyl sulfonic acids or salts. By "substantially free" is meant less than 0.05 weight percent (wt.%), preferably 0 wt.%, based on total weight of fluoropolymer being produced, of any fluorosurfactant other than perfluoroaliphatic sulfinates.

The amount of perfluoroaliphatic sulfinate surfactant to be employed in the aqueous emulsion polymerization solution is determined by balancing emulsion stability and polymerization rate with foam generation. If too little surfactant is used, excessive reactor fouling will occur and reaction rate may be undesirably slow. If too much surfactant is used, excessive foam will be generated. In an emulsion polymerization process of this invention, the amount of surfactant employed is typically 0.05 to 3 wt.%, based on the total weight of fluoropolymer being produced. The type of monomer to be polymerized affects emulsion stability. The preceding amounts are based on the amount of active ingredient, not on amount of a surfactant solution containing less that 100% active ingredient.

The emulsion polymerization process of this invention may be a continuous, semi-batch or batch process.

In the semi-batch emulsion polymerization process of this invention, a gaseous monomer mixture of a desired composition (initial monomer charge) is introduced into a reactor which contains an aqueous medium. The reactor is typically not completely filled with the aqueous medium, so that a vapor space remains. The aqueous medium comprises a perfluoroaliphatic fluorosurfactant dispersing agent of the type discussed above. Optionally, the aqueous medium may contain a pH buffer, such as a phosphate or acetate buffer for controlling the pH of the polymerization reaction. Instead of a buffer, a base, such as NaOH may be used to control pH. Generally, pH is controlled to between 1 and 7 (preferably 3-7), depending upon the type of fluoroelastomer being made. Alternatively, or additionally, pH buffer or base may be added to the reactor at various times throughout the polymerization reaction, either alone or in combination with other ingredients such as polymerization initiator, optional liquid cure site monomer or optional chain transfer agent. Also optionally, the initial aqueous medium may contain a water-soluble inorganic peroxide polymerization initiator.

The initial monomer charge contains a quantity of TFE, and one or more additional monomers, different from TFE. The amount of monomer mixture contained in the initial charge is set so as to result in a reactor pressure between 0.5 and 10 MPa.

The monomer mixture is dispersed in the aqueous medium and, optionally, a chain transfer agent may also be added at this point while the reaction mixture is agitated, typically by mechanical stirring. In the initial gaseous monomer charge, the relative amount of each monomer is dictated by reaction kinetics and is set so as to result in a fluoropolymer having the desired ratio of copolymerized monomer units (i.e. very slow reacting monomers must be present in a higher amount relative to the other monomers than is desired in the composition of the fluoropolymer to be produced).

The temperature of the semi-batch reaction mixture is maintained in the range of 25°C - 130°C, preferably 50°C - 100°C. Polymerization begins when the initiator either thermally decomposes or reacts with reducing agent and the resulting radicals react with dispersed monomer.

Additional quantities of the gaseous major monomer(s) and optional cure site monomer (incremental feed) are added at a controlled rate throughout the polymerization in order to maintain a constant reactor pressure at a controlled temperature. The relative ratio of monomers contained in the incremental feed is set to be approximately the same as the desired ratio of copolymerized monomer units in the resulting fluoropolymer. Thus, the incremental feed contains between 10 to 70 weight percent, based on the total weight of the monomer mixture, of TFE and 90 to 30 weight percent total of one or more additional monomers that are different from TFE. Chain transfer agent may also, optionally, be introduced into the reactor at any point during this stage of the polymerization. Additional dispersing agent and polymerization initiator may also be fed to the reactor during this stage. The amount of fluoropolymer formed is approximately equal to the cumulative amount of incremental monomer feed. One skilled in the art will recognize that the molar ratio of monomers in the incremental feed is not necessarily exactly the same as that of the desired (i.e. selected) copolymerized monomer unit composition in the resulting fluoropolymer because the composition of the initial charge may not be exactly that required for the selected final fluoropolymer composition, or because a portion of the monomers in the incremental feed may dissolve into the polymer particles already formed, without reacting. Polymerization times in the range of from 2 to 30 hours are typically employed in this semi-batch polymerization process.

The continuous emulsion polymerization process of this invention differs from the semi-batch process in the following manner. The reactor is completely filled with aqueous medium so that there is no vapor space. Gaseous monomers and solutions of other ingredients such as water-soluble monomers, chain transfer agents, buffer, bases, polymerization initiator and dispersing agent, are fed to the reactor in separate streams at a constant rate. Feed rates are controlled so that the average fluoropolymer residence time in the reactor is generally between 0.2 to 4 hours. Short residence times are employed for reactive monomers, whereas less reactive monomers such as perfluoro(alkyl vinyl) ethers require more time. The temperature of the continuous process reaction mixture is maintained in the range of 25°C - 130°C, preferably 70°C - 120°C.

In the process of this invention, the polymerization temperature is maintained in the range of 25°-130°C. If the temperature is below 25°C, the rate of polymerization is too slow for efficient reaction on a commercial scale, while if the temperature is above 130°C, the reactor pressure required in order to maintain polymerization is too high to be practical.

The polymerization pressure is controlled in the range of 0.5 to 10 MPa, preferably 1 to 6.2 MPa. In a semi-batch process, the desired polymerization pressure is initially achieved by adjusting the amount of gaseous monomer(s) in the initial charge, and after the reaction is initiated, the pressure is adjusted by controlling the incremental gaseous monomer feed. In a continuous process, pressure is adjusted by means of a back-pressure regulator in the dispersion effluent line. The polymerization pressure is set in the above range because if it is below 1 MPa, the monomer concentration in the polymerization reaction system is too low to obtain a satisfactory reaction rate. In addition, the molecular weight does not increase sufficiently. If the pressure is above 10 MPa, the cost of the required high pressure equipment is very high.

The amount of fluoropolymer formed is approximately equal to the amount of incremental feed charged, and is in the range of 10-30 parts by weight of fluoropolymer per 100 parts by weight of aqueous medium, preferably in the range of 20-25 parts by weight of the fluoropolymer. The degree of fluoropolymer formation is set in the above range because if it is less than 10 parts by weight, productivity is undesirably low, while if it is above 30 parts by weight, the solids content becomes too high for satisfactory stirring.

Water-soluble peroxides which may be used to initiate polymerization in this invention include, for example, the ammonium, sodium or potassium salts of hydrogen persulfate. In a redox-type initiation, a reducing agent such as sodium sulfite, is present in addition to the peroxide. These water-soluble peroxides may be used alone or as a mixture of two or more types. The amount to be used is selected generally in the range of 0.01 to 0.4 parts by weight per 100 parts by weight of polymer, preferably 0.05 to 0.3. During polymerization some of the fluoropolymer chain ends are capped with fragments generated by the decomposition of these peroxides.

Optionally, fluoropolymer gum or crumb may be isolated from the fluoropolymer dispersions produced by the process of this invention by the addition of a coagulating agent to the dispersion. Any coagulating agent known in the art may be used. Preferably, a coagulating agent is chosen which forms a water- soluble salt with the surfactant contained in the dispersion. Otherwise, precipitated surfactant salt may become entrained in the isolated fluoroelastomer and then retard curing (i.e. crosslinking) of the fluoroelastomer with bisphenol-type curatives.

Common coagulants include, but are not limited to aluminum salts (e.g. potassium aluminum sulfate), calcium salts (e.g. calcium nitrate) or magnesium salts (e.g. magnesium sulfate). Salts of calcium, magnesium, or univalent cations with such short chain surfactants are water-soluble, and thus readily removable from the fluoroelastomer.

Fluoropolymers prepared by the process of this invention are useful in many industrial applications including seals, wire coatings, tubing and laminates.

### EXAMPLES

### TEST METHODS

Mooney viscosity, ML (1 + 10), was determined according to ASTM D1646 with an L (large) type rotor at 121°C, using a preheating time of one minute and rotor operation time of 10 minutes.

Inherent viscosity was measured at 30°C in methyl ethyl ketone solvent (0.1 g polymer in 100 ml solvent).

The invention is further illustrated by, but is not limited to, the following examples.

Perfluoroaliphatic sulfinates suitable for use in the emulsion polymerization process of this invention were prepared by the following procedure.

### Preparation of Perfluorooctyl Sulfinate [C₈F₁₇-SO₂Na]:

A 1-L three neck flask equipped with temperature probe, mechanical stirrer and a condenser was left under nitrogen stream overnight. The flask was charged with 1-idoperfluorooctane (136.5 g, 0.25 mol) followed by sodium bicarbonate (21 g, 0.25 mol). The mixture was stirred for 5 min before adding deoxygenated distilled water (100 mL). While stirring with a mechanical stirrer, sodium dithionite (52.25 g) was added slowly over a period of 30-40 minutes. The mixture foamed and the temperature rose to about 32°C. After addition of all the sodium dithionite, acetonitrile (75 mL) was introduced. Foam formation and some heat generation was again observed. The reaction mixture was allowed to stir at ambient temperature overnight and then was heated to 75°C for an additional 3 hrs. The reaction mixture was cooled and filtered. The filtered solid (about 134 grams) was dissolved in approximately 700 mL of acetone. Several scoops of carbon black were added and the solution was stirred for several hours. After concentration (i.e. removal of solvent on a rotary evaporator) at room temperature and filtration, about 69 g of white solid product was recovered. The filtrate from the reaction mixture was further concentrated to give about 62 grams of material which was treated similarly with acetone and carbon black. After drying, a additional 41 of product was obtained. Total yield was about 86%. ¹⁹F-NMR (376.89 MHz, acetone-d₆): -82.1 (m, 3F), -122.9 (m, 6F), -123.6 (s, br, 4F), -127.1 (s, 2F), -132.7 (s, 2F).

### Preparation of Perfluorohexyl Sulfinate [C₆F₁₃-SO₂Na]:

To a round-bottom flask equipped with a mechanical stirrer, condenser and a temperature probe, under a stream of nitrogen was added 1-iodoperfluorohexane (100 g, 0.22 mol), sodium bicarbonate (18.8 g, 0.22 mol), and deoxygenated distilled water (93 mL). While stirring, sodium dithionite (46.1 g, 0.26 mol) was slowly added. The reaction mixture foamed, evolving heat that raised the temperature to about 32°C. The reaction solution started to become yellowish. After addition of all the sodium dithionite, acetonitrile (72 mL) was then added. The reaction mixture was heated to 70°-75°C for 4-5 hours, and the reaction mixture turned to deeper yellow color. After cooling, the reaction mixture was filtered and collected solid was dissolved in ethyl acetate. The organic solution was separated and washed twice with deoxygenated water in a separatory funnel. The solution was concentrated on a rotary evaporator and further dried under high vacuum. The desired product was obtained as a white solid (83 grams, 91.2% yield). ¹⁹F-NMR (376.89 MHz, acetone-d₆): -82.2 (m, 3F), -123.2 (m, 2F), -123.7 (m, 2F), -124.0 (m, 2F), -127.2 (s, 2F), -132.6 (s, 2F).

Other perfluoroalkyl and perfluoroalkoxy sulfinates were prepared by the similar procedures.

### Perfluorobutyl Sulfinate [C₄F₉-SO₂Na]:

¹⁹F-NMR (376.89 MHz, acetone-d₆): -82.5 (m, 3F), -124.5 (m, 2F), - 127.5 (m, 2F), -131.4 (s, br, 2F).

### 1,6-Perfluorohexyl Disulfinate [C₆F₁₂-(SO₂Na)₂]:

¹⁹F-NMR (376.89 MHz, D₂O): -122.5 (m, 4F), -122.8 (m, 4F), -130.3 (m, 4F).

### 3-Oxa-Perfluorohexyl Sulfinate [C₃F₇-O-CF₂CF₂-SO₂Na]:

¹⁹F-NMR (376.89 MHz, acetone-d₆): -83.5 (m, 3F), -83.8 to -85.3 (m, 4F), -131.1 (s, br, 2F), -135.7 (s, br, 2F).

### Example 1

A one-liter reactor was charged with deoxygenated distilled water (450 mL), disodium hydrogen phosphate heptahydrate (2.0 g), ammonium persulfate (0.4 g), and perfluorooctyl sulfinate (4.5 g). The reactor was sealed, cooled, and evacuated, then tetrafluoroethylene (TFE, 45 g) and perfluoro(methyl vinyl ether) (PMVE, 40 g) were transferred into the reactor. The polymerization reaction was allowed to proceed at 70°C for 8 hours at an agitation speed of 900 rpm. The reaction was cooled and the latex obtained was coagulated with saturated aqueous magnesium sulfate solution. The precipitated polymer was collected by filtration. The polymer was washed several times with warm water and dried in a vacuum oven at 80°C for 24 hours. A white polymer (72 grams) was obtained. This polymer had a composition of TFE/PMVE = 66.1/33.9 (mole%) as determined by ¹⁹F19 NMR spectroscopy in hexafluorobenzene solvent at 30°C. The polymer had a Tg at -6.8°C as determined by DSC (2^{nd} heat curve).

### Example 2

A one-liter reactor was charged with deoxygenated distilled water (450 mL), disodium hydrogen phosphate heptahydrate (2.0 g), ammonium persulfate (0.4 g), and perfluorohexyl sulfinate (4.2 g). The reactor was sealed, cooled, and evacuated, then tetrafluoroethylene (TFE, 45 g) and perfluoro(methyl vinyl ether) (PMVE, 40 g) were transferred into the reactor. The polymerization reaction was allowed to proceed at 70°C for 8 hours at an agitation speed of 900 rpm. The reaction was cooled, about half of the latex obtained was coagulated with saturated aqueous magnesium sulfate solution. Precipitated polymer was collected by filtration. Polymer was washed several times with warm water and dried in a vacuum oven at 80°C for 24 hours. A white polymer (28.6 grams) was obtained. This polymer had a composition of TFE/PMVE = 64.5/33.5 (mole%) as determined by ¹⁹F NMR spectroscopy in hexafluorobenzene solvent at 30°C. The polymer had a Tg at -8.5°C as determined by DSC (2^{nd} heat curve).

### Example 3 (not of the present invention)

A solution of 37.0 g of sodium perfluorohexyl sulfinate, 18.5 g disodium phosphate heptahydrate and 24,907 g of deionized, deoxygenated water was charged to a 40 liter reactor. The solution was heated to 80°C. After removal of trace oxygen, the reactor was pressurized with 2139 grams of a mixture of 4.1 weight percent (wt.%) vinylidene fluoride, 86.0 wt.% hexafluoropropene, and 9.9 wt.% tetrafluoroethylene. At the end of pressurization, the reactor pressure was 2.0 MPa. The reactor was charged with 50.0 ml of an initiator solution of 1 wt.% ammonium persulfate and 5 wt.% disodium phosphate heptahydrate to start polymerization. As the reactor pressure dropped, a mixture of 35.0 wt.% vinylidene fluoride, 37.1 wt.% hexafluoropropene, and 27.9 wt.% tetrafluoroethylene was fed to the reactor to maintain a 2.0 MPa pressure. Additional initiator solution was added to maintain polymerization rate. After a total of 8333 g incremental monomers had been fed, corresponding to a total of 170 ml initiator solution and 16.2 hours, monomer and initiator feed was discontinued. The reactor was cooled and the pressure in the reactor reduced to atmospheric. The resulting fluoroelastomer latex had a solids content of 24.3 wt.% solids, a pH of 2.95, and an average particle diameter of 355 nm, measured by BI-9000 Particle Sizing, Brookhaven Instruments Corporation. The latex was coagulated with aluminum sulfate solution, washed with deionized water, and dried.

### Examples 4 (not of the present invention)

A solution of 37.0 g of sodium perfluorohexyl sulfinate, 18.5 g disodium phosphate heptahydrate and 24,907 g of deionized, deoxygenated water was charged to a 40 liter reactor. The solution was heated to 80°C. After removal of trace oxygen, the reactor was pressurized with 2121 grams of a mixture of 4.1 wt.% vinylidene fluoride (VF₂), 85.9 wt.% hexafluoropropene (HFP), and 10.0 wt.% tetrafluoroethylene (TFE). At the end of pressurization, the reactor pressure was 2.0 MPa. The reactor was charged with 50.0 ml of an initiator solution of 1 wt.% ammonium persulfate and 5 wt.% disodium phosphate heptahydrate to start polymerization. As the reactor pressure dropped, a mixture of 35.0 wt.% vinylidene fluoride, 37.1 wt.% hexafluoropropene, and 27.9 wt.% tetrafluoroethylene was fed to the reactor to maintain a 2.0 MPa pressure. After 45 g of this monomer mixture had been fed, 25.0 g of a mixture of 37.29 mole percent (mol.%) 1,4-diiodoperfluorobutane, 46.38 mol.% 1,6-diiodoperfluorohexane, 11.98 mol).% 1,8-diiodoperfluorooctane, and 3.76 mol.% 1,10-diiodoperfluorodecane was charged to the reactor. Additional initiator solution was added to maintain the polymerization rate. After 3700 g of the monomer mixture had been added, 4-iodo-3,3,4,4-tetrafluorobutene-1 (ITFB) was introduced to the reactor at a feed rate of 5.0 g ITFB per 1000 g monomer. After a total of 8333 g incremental major monomer had been fed, corresponding to a total of 350 ml initiator solution, 20.4 g ITFB and 16.2 hours, monomer and initiator feed was discontinued. The reactor was cooled and the pressure in the reactor reduced to atmospheric. The resulting fluoroelastomer latex had a solids content of 24.4 wt.% solids, a pH of 3.12, and an average particle diameter of 339 nm, measured by BI-9000 Particle Sizing, Brookhaven Instruments Corporation. The latex was coagulated with aluminum sulfate solution, washed with deionized water, and dried. The fluoroelastomer had an inherent viscosity of 0.40 dl/g, a Mooney viscosity, ML (1 + 10) @121°C, of 38 and contained 34.3 wt.% VF₂, 36.6 wt.% HFP, 28.9 wt.% TFE and 0.24 wt.% I.

### Example 5 (not of the present invention)

A solution of 74.1 g of sodium perfluorohexyl sulfinate, 18.5 g disodium phosphate heptahydrate and 24,907 g of deionized, deoxygenated water was charged to a 40 liter reactor. The solution was heated to 80°C. After removal of trace oxygen, the reactor was pressurized with 2125 grams of a mixture of 4.0 wt.% vinylidene fluoride, 86.0 wt.% hexafluoropropene, and 10.0 wt.% tetrafluoroethylene. At the end of pressurization, the reactor pressure was 2.0 MPa. The reactor was charged with 50.0 ml of an initiator solution of 1 wt.% ammonium persulfate and 5 wt.% disodium phosphate heptahydrate to start polymerization. As the reactor pressure dropped, a mixture of 35.0 wt.% vinylidene fluoride, 37.1 wt.% hexafluoropropene, and 27.9 wt.% tetrafluoroethylene was fed to the reactor to maintain a 2.0 MPa pressure. After 45 g of this monomer mixture had been fed, 25.0 g of a mixture of 37.29 mol% 1,4-diiodoperfluorobutane, 46.38 mol% 1,6-diiodoperfluorohexane, 11.98 mol% 1,8-diiodoperfluorooctane, and 3.76 mol% 1,10-diiodoperfluorodecane was charged to the reactor. Additional initiator solution was added to maintain polymerization rate. After 3700 g of the monomer mixture had been added, 4-iodo-3,3,4,4-tetrafluorobutene-1 (ITFB) was introduced to the reactor at a feed rate of 5.0 g ITFB per 1000 g monomer. After a total of 8333 g incremental major monomer had been fed, corresponding to a total of 350 ml initiator solution, 20.4 g ITFB and 15.4 hours, monomer and initiator feed was discontinued. The reactor was cooled and the pressure in the reactor reduced to atmospheric. The resulting fluoroelastomer latex had a solids content of 24.7 wt.% solids, a pH of 2.97, and an average particle diameter of 302 nm, measured by BI-9000 Particle Sizing, Brookhaven Instruments Corporation. The latex was coagulated with aluminum sulfate solution, washed with deionized water, and dried. The fluoroelastomer had an inherent viscosity of 0.39 dl/g, a Mooney viscosity, ML (1 + 10) @121°C, of 32 and contained 33.7 wt.% VF₂, 37.1 wt.% HFP, 29.0 wt.% TFE and 0.24 wt.% I.

## Claims

1. An emulsion polymerization process for the production of a fluoroelastomer comprising copolymerized units of tetrafluoroethylene and perfluoro(alkyl vinyl) ether, said process comprising polymerizing tetrafluoroethylene and perfluoro(alkyl vinyl) ether in an aqueous medium comprising initiator and dispersing agent to obtain an aqueous dispersion of fluoroelastomer,
wherein said dispersing agent consists essentially of at least one perfluoroaliphatic sulfinate and contains fluorosurfactants other than perfluoroaliphatic sulfinates in an amount of less than 0.05 wt%, based on the total weight of fluoroelastomer being produced, and
wherein the fluoroelastomer contains between 10 to 70 weight percent, based on the weight of the fluoroelastomer, of copolymerized units of tetrafluoroethylene.

2. The process of claim 1 wherein said perfluoroaliphatic sulfinate is of the formula R_{f} - SO₂M, where R_{f} is a perfluoroalkyl group or a perfluoroalkoxy group containing 1 to 20 carbon atoms and M is a cation having a valence of 1.

3. The process of claim 2 wherein said R_{f} is a perfluoroalkyl group or a perfluoroalkoxy group containing 4 to 10 carbon atoms.

4. The process claim 3 wherein said perfluoroaliphatic sulfinate is of the formula C₄F₉-SO₂Na; C₆F₁₃-SO₂Na; C₈F₁₇SO₂Na; and C₃F₇-O-CF₂CF₂-SO₂Na.

5. The process of claim 1 wherein said perfluoroaliphatic sulfinate is of the formula R_{f} - (SO₂M)ₙ where R_{f'} is a polyvalent perfluoro radical containing 1 to 20 carbon atoms, M is a cation having a valence of 1 and n is an integer from 2-4.

6. The process of claim 5 wherein R_{f'} is a perfluoroalkylene radical containing 4 to 10 carbon atoms.

7. The process of claim 6 wherein said perfluoroaliphatic sulfinate is of the formula C₆F₁₂-(SO₂Na)₂.

8. The process of claim 1 wherein said fluoroelastomer comprises copolymerized units selected from the group consisting of i) vinylidene fluoride, perfluoro(methyl vinyl) ether, tetrafluoroethylene and 4-bromo-3,3,4,4-tetrafluorobutene-1; ii) vinylidene fluoride, perfluoro(methyl vinyl) ether, tetrafluoroethylene and 4-iodo-3,3,4,4-tetrafluorobutene-1; iii) vinylidene fluoride, perfluoro(methyl vinyl) ether, tetrafluoroethylene and 1,1,3,3,3-pentafluoropropene; iv) tetrafluoroethylene, perfluoro(methyl vinyl) ether and ethylene; v) tetrafluoroethylene, perfluoro(methyl vinyl) ether, ethylene and 4-bromo-3,3,4,4-tetrafluorobutene-1; vi) tetrafluoroethylene, perfluoro(methyl vinyl) ether, ethylene and 4-iodo-3,3,4,4-tetrafluorobutene-1; vii) tetrafluoroethylene and perfluoro(methyl vinyl) ether; viii) tetrafluoroethylene, perfluoro(methyl vinyl) ether and perfluoro(8-cyano-5-methyl-3,6-dioxa-1-octene); ix) tetrafluoroethylene, perfluoro(methyl vinyl) ether and 4-bromo-3,3,4,4-tetrafluorobutene-1; x) tetrafluoroethylene, perfluoro(methyl vinyl) ether and 4-iodo-3,3,4,4-tetrafluorobutene-1; and xi) tetrafluoroethylene, perfluoro(methyl vinyl) ether and perfluoro(2-phenoxypropyl vinyl) ether.

## Patentansprüche

1. Emulsionspolymerisationsverfahren zur Herstellung eines Fluorelastomers, das copolymerisierte Einheiten von Tetrafluorethylen und Perfluor(alkylvinyl)ether umfasst, wobei das Verfahren das Polymerisieren von Tetrafluorethylen und Perfluor(alkylvinyl)ether in einem wässrigen Medium umfasst, das einen Initiator und ein Dispergiermittel umfasst, um eine wässrige Dispersion von Fluorelastomer zu erhalten,
wobei das Dispergiermittel im Wesentlichen aus mindestens einem perfluoraliphatischen Sulfinat besteht und Fluortenside, bei denen es sich nicht um perfluoraliphatische Sulfinate handelt, in einer Menge von weniger als 0,05 Gew.-%, auf das Gesamtgewicht des Fluorelastomers, das hergestellt wird, bezogen, enthält und
wobei das Fluorelastomer 10 bis 70 Gewichtsprozent, auf das Gewicht des Fluorelastomers bezogen, copolymerisierte Einheiten von Tetrafluorethylen enthält.

2. Verfahren nach Anspruch 1, wobei das perfluoraliphatische Sulfinat die Formel R_{f} - SO₂M aufweist, wobei R_{f} eine Perfluoralkylgruppe oder eine Perfluoralkoxygruppe ist, die 1 bis 20 Kohlenstoffatome enthält und M ein Kation ist, das eine Wertigkeit von 1 aufweist.

3. Verfahren nach Anspruch 2, wobei das R_{f} eine Perfluoralkylgruppe oder eine Perfluoralkoxygruppe ist, die 4 bis 10 Kohlenstoffatome enthält.

4. Verfahren nach Anspruch 3, wobei das perfluoraliphatische Sulfinat die Formel C₄F₉-SO₂Na, C₆F₁₃-SO₂Na, C₈F₁₇-SO₂Na und C₃F₇-O-CF₂CF₂-SO₂Na aufweist.

5. Verfahren nach Anspruch 1, wobei das perfluoraliphatische Sulfinat die Formel R_{f} - (SO₂M)ₙ aufweist, wobei R_{f} ein mehrwertiges Perfluorradikal ist, das 1 bis 20 Kohlenstoffatome enthält, M ein Kation ist, das eine Wertigkeit von 1 aufweist und n eine ganze Zahl von 2-4 ist.

6. Verfahren nach Anspruch 5, wobei R_{f} ein Perfluoralkylenradikal ist, das 4 bis 10 Kohlenstoffatome enthält.

7. Verfahren nach Anspruch 6, wobei das perfluoraliphatische Sulfinat die Formel C₆F₁₂-(SO₂Na)₂ aufweist.

8. Verfahren nach Anspruch 1, wobei das Fluorelastomer copolymerisierte Einheiten umfasst ausgewählt aus der Gruppe bestehend aus i) Vinylidenfluorid, Perfluor(methylvinyl)ether, Tetrafluorethylen und 4-Brom-3,3,4,4-tetrafluorbuten-1; ii) Vinylidenfluorid, Perfluor(methylvinyl)ether, Tetrafluorethylen und 4-Iod-3,3,4,4-tetrafluorbuten-1; iii) Vinylidenfluorid, Perfluor(methylvinyl)ether, Tetrafluorethylen und 1,1,3,3,3-Pentafluorpropen; iv) Tetrafluorethylen, Perfluor(methylvinyl)ether und Ethylen; v) Tetrafluorethylen, Perfluor(methylvinyl)ether, Ethylen und 4-Brom-3,3,4,4-tetrafluorbuten-1; vi) Tetrafluorethylen, Perfluor(methylvinyl)ether, Ethylen und 4-Iod-3,3,4,4-tetrafluorbuten-1; vii) Tetrafluorethylen und Perfluor(methylvinyl)ether; viii) Tetrafluorethylen, Perfluor(methylvinyl)ether und Perfluor(8-cyano-5-methyl-3,6-dioxa-1-octen); ix) Tetrafluorethylen, Perfluor(methylvinyl)ether und 4-Brom-3,3,4,4-tetrafluorbuten-1; x) Tetrafluorethylen, Perfluor(methylvinyl)ether und 4-Iod-3,3,4,4-tetrafluorbuten-1 und xi) Tetrafluorethylen, Perfluor(methylvinyl)ether und Perfluor(2-phenoxypropylvinyl)ether.

## Revendications

1. Procédé de polymérisation en émulsion pour la production d'un élastomère fluoré comprenant des motifs copolymérisés de tétrafluoroéthylène et d'éther de perfluoro(alkyl vinyle), ledit procédé comprenant la polymérisation du tétrafluoroéthylène et de l'éther de perfluoro(alkyl vinyle) dans un milieu aqueux comprenant un initiateur et un agent de dispersion pour obtenir une dispersion aqueuse d'élastomère fluoré;
dans lequel ledit agent de dispersion est essentiellement constitué d'au moins un sulfinate perfluoroaliphatique et contient des tensioactifs fluorés autres que les sulfinates perfluoroaliphatiques en une quantité inférieure à 0,05 % en pds, sur la base du poids total de l'élastomère fluoré qui est produit, et
dans lequel l'élastomère fluoré contient entre 10 à 70 pour cent en poids, basés sur le poids de l'élastomère fluoré, de motifs copolymérisés de tétrafluoroéthylène.

2. Procédé selon la revendication 1, dans lequel ledit sulfinate perfluoroaliphatique est de formule R_{f}-SO₂M, où R_{f} est un groupe perfluoroalkyle ou un groupe perfluoroalcoxy contenant 1 à 20 atome(s) de carbone et M est un cation ayant une valence de 1.

3. Procédé selon la revendication 2, dans lequel ledit R_{f} est un groupe perfluoroalkyle ou un groupe perfluoroalcoxy contenant 4 à 10 atomes de carbone.

4. Procédé selon la revendication 3, dans lequel ledit sulfinate perfluoroaliphatique est de formule C₄F₉-SO₂Na; C₆F₁₃-SO₂Na; C₈F₁₇-SO₂Na; et C₃F₇-O-CF₂CF₂-SO₂Na.

5. Procédé selon la revendication 1, dans lequel ledit sulfinate perfluoroaliphatique est de formule R_{f}-(SO₂M)ₙ où R_{f} est un radical perfluoré polyvalent contenant 1 à 20 atome(s) de carbone, M est un cation ayant une valence de 1 et n est un nombre entier d'une valeur de 2 à 4.

6. Procédé selon la revendication 5, dans lequel R_{f} est un radical perfluoroalcylène contenant 4 à 10 atomes de carbone.

7. Procédé selon la revendication 6, dans lequel ledit sulfinate perfluoroaliphatique est de formule C₆F₁₂-(SO₂Na)₂.

8. Procédé selon la revendication 1, dans lequel ledit élastomère fluoré comprend des motifs copolymérisés sélectionnés parmi le groupe constitué de i) fluorure de vinylidène, éther de perfluoro(méthyl vinyle), tétrafluoroéthylène et 4-bromo-3,3,4,4-tétrafluorobutène-1; ii) fluorure de vinylidène, éther de perfluoro(méthyl vinyle), tétrafluoroéthylène et 4-iodo-3,3,4,4-tétrafluorobutène-1; iii) fluorure de vinylidène, éther de perfluoro(méthyl vinyle), tétrafluoroéthylène et 1,1,3,3,3-pentafluoropropène; iv) tétrafluoroéthylène, éther de perfluoro(méthyl vinyle) et éthylène; v) tétrafluoroéthylène, éther de perfluoro(méthyl vinyle), éthylène et 4-bromo-3,3,4,4-tétrafluorobutène-1; vi) tétrafluoroéthylène, éther de perfluoro(méthyl vinyle), éthylène et 4-iodo-3,3,4,4-tétrafluorobutène-1; vii) tétrafluoroéthylène et éther de perfluoro(méthyl vinyle); viii) tétrafluoroéthylène, éther de perfluoro(méthyl vinyle) et perfluoro(8-cyano-5-méthyl-3,6-dioxa-1-octène); ix) tétrafluoroéthylène, éther de perfluoro(méthyl vinyle) et 4-bromo-3,3,4,4-tétrafluorobutène-1; x) tétrafluoroéthylène, éther de perfluoro(méthyl vinyle) et 4-iodo-3,3,4,4-tétrafluorobutène-1; et xi) tétrafluoroéthylène, éther de perfluoro(méthyl vinyle) et éther de perfluoro(2-phénoxypropyl vinyle).
